(19) Europäisches Patentamt

European Patent Office

Office européen des brevets

(11) **EP 1 988 120 B1**

(12) **EUROPEAN PATENT SPECIFICATION**

(45) Date of publication and mention
of the grant of the patent:
**16.12.2009 Bulletin 2009/51**

(51) Int Cl.:
*C08L 7/00* (2006.01)          *B60C 1/00* (2006.01)
*B60C 11/00* (2006.01)          *C08K 3/36* (2006.01)

(21) Application number: **07740999.3**

(22) Date of filing: **04.04.2007**

(86) International application number:
**PCT/JP2007/057563**

(87) International publication number:
**WO 2007/114469 (11.10.2007 Gazette 2007/41)**

(54) **TIRE WITH TIRE TREAD STRUCTURE INCLUDING CAP TREAD AND BASE TREAD**

REIFEN MIT REIFENLAUFFLÄCHENSTRUKTUR MIT EINER KAPPENLAUFFLÄCHE UND BASISLAUFFLÄCHE

PNEU AVEC STRUCTURE DE BANDE DE ROULEMENT COMPRENANT UNE BANDE DE ROULEMENT EXTERNE ET UNE BANDE DE ROULEMENT DE BASE

(84) Designated Contracting States:
**DE FR SE**

(30) Priority: **06.04.2006 JP 2006105236**

(43) Date of publication of application:
**05.11.2008 Bulletin 2008/45**

(73) Proprietor: **SUMITOMO RUBBER INDUSTRIES, LTD.**
**Kobe-shi,**
**Hyogo 651-0072 (JP)**

(72) Inventor: **HIRAYAMA, Tomoaki**
**Kobe-shi, Hyogo 6510072 (JP)**

(74) Representative: **Manitz, Finsterwald & Partner GbR**
**Martin-Greif-Strasse 1**
**80336 München (DE)**

(56) References cited:
| | |
|---|---|
| EP-A- 0 644 235 | EP-A- 0 738 614 |
| EP-A- 0 754 574 | EP-A- 0 940 435 |
| EP-A- 1 426 409 | EP-A- 1 491 368 |
| EP-A- 1 577 341 | JP-A- 07 096 715 |
| JP-A- 09 150 606 | JP-A- 11 059 124 |
| JP-A- 11 165 502 | JP-A- 11 254 909 |
| JP-A- 11 268 505 | JP-A- 11 315 166 |
| JP-A- 11 315 170 | JP-A- 2000 185 520 |
| JP-A- 2000 191 832 | JP-A- 2006 213 193 |

**Description**

TECHNICAL FIELD

The present invention relates to a tire having a tire tread comprising a base tread and a cap tread.

BACKGROUND ART

In recent years, characteristics required for a tire are wide-ranging, such as steering stability, abrasion resistance, and ride quality in addition to low fuel consumption. In order to improve these performances, various measures have been taken. Among these performances, particularly grip performance and rolling resistance (low fuel consumption) of a tire are characteristics regarding hysteresis loss of a rubber. In general, as a hysteresis loss becomes larger, grip force becomes larger and thus braking performance is improved. However, rolling resistance also becomes larger, and fuel consumption is increased. As described above, grip performance and rolling resistance are incompatible with each other. Therefore, in order to satisfy both of the properties simultaneously, various rubber compositions for a tread have been suggested.

There has been known, for instance, a method of improving grip performance and rolling resistance by using raw materials derived from petroleum resources on a tire tread portion, in which the tread has a two-layered structure comprising a cap tread part prepared by using a composition excellent in grip performance and a base tread part prepared by using a composition being excellent in rolling resistance.

However, interests in the earth environmental protection has been increasing in recent years, and automobiles are not exceptional so that regulations on $CO_2$ emission has been made more rigorous. Further, since petroleum resources are limited and supply thereof has been decreasing year by year, increase of an oil price in future is predicted. Therefore, there is a limitation in use of materials derived from petroleum resources such as synthetic rubbers and carbon black.

A method of compounding silica instead of carbon black has been known. However, when silica is compounded, although rolling resistance can be lowered, there has been a problem that grip performance is lowered.

JP2003-63206A discloses an ecological tire, in which a ratio of non-petroleum resources is increased by having a tread using a specific non-petroleum resources. The ecological tire has equivalent properties as compared with a tire mainly comprising materials derived from petroleum resources. However, rolling resistance, steering stability and rubber strength are not improved in favorable balance, and thus further improvements are still required.

EP 1 577 341 A1 discloses a rubber composition for a tire tread comprising 5 to 150 parts by weight of silica having a $N_2SA$ between 100 and 300 $m^2/g$ based on 100 parts by weight of a rubber component containing 5 to 100 % by weight of an epoxidized natural rubber, and 1 to 20 parts by weight of a silane coupling agent and 0.1 to 20 parts by weight of an anionic surfactant based on 100 parts by weight of the silica.

EP 1 426 409 A1 relates to a rubber composition for a tire tread comprising 100 parts by weight of a rubber component containing at least 5 % by weight of natural rubber graft-copolymerized with an organic compound having an unsaturated bond and/or epoxidized rubber and 5 to 150 parts by weight of carbon black and/or silica having a $N_2SA$ between 100 and 300 $m^2/g$.

EP 0 644 235 A1 discloses a rubber composition containing 5 to 95 parts by weight of epoxidized natural rubber, 5 to 85 parts by weight of silica, 0.5 to 8.5 parts by weight of a silane coupling agent and 95 to 5 parts by weight of a rubber, such as polybutadiene rubber, styrene-butadiene rubber, natural rubber or the like.

EP 1 491 368 A2, EP 0 940 435 A1, EP 0 754 574 A2 and EP 0 738 614 A1 disclose pneumatic tires having a tire tread including a cap tread and a base tread.

DISCLOSURE OF INVENTION

It is an object of the present invention to provide a tire having a tire tread comprising a cap tread and a base tread, use of which makes it possible to provide for decrease in petroleum supply in

future, and improve rolling resistance, steering stability and rubber strength in favorable balance, as compared with a tire produced by using a rubber composition for a tread or a rubber composition for a base tread, which mainly comprises materials derived from petroleum resources.

The present invention relates to a tire having a tire tread comprising a cap tread and a base tread, in which:

- the base tread is prepared by using a rubber composition for a base tread comprising 25 to 80 parts by weight of silica having a BET specific surface area between 80 and 200 $m^2/g$ on the basis of 100 parts by weight of a rubber component comprising a natural rubber,
- the cap tread is prepared by using a rubber composition for a cap tread, wherein the rubber composition for the cap tread contains between 50 and 90 parts by weight of silica on the basis of 100 parts by weight of the rubber component and between 4 and 16 parts by weight of a silane coupling agent on the basis of 100 parts by weight of silica, wherein the content of a natural rubber in the rubber component contained in the rubber composition for the cap tread is not more than 30 % by weight and the content of an epoxidized natural rubber in the rubber component contained in the rubber composition for the cap tread is not less than 70 % by weight, and

- the thickness of the base tread is 17 to 50 % of the overall thickness of the tire tread.

BEST MODE FOR CARRYING OUT THE INVENTION

The tire of the present invention has a tire tread comprising a cap tread and a base tread.

The tire of the present invention is characterized in that the base tread is prepared by using a rubber composition for a base tread comprising 25 to 80 parts by weight of silica having a BET specific surface area between 80 and 200 $m^2/g$ on the basis of 100 parts weight of a rubber component comprising a natural rubber.

Furthermore, the tire is characterized in that the cap tread is prepared by using a rubber composition for a cap tread, wherein the rubber composition for the cap tread contains between 50 and 90 parts by weight of silica on the basis of 100 parts by weight of the rubber component and between 4 and 16 parts by weight of a silane coupling agent on the basis of 100 parts by weight of silica, wherein the content of a natural rubber in the rubber component contained in the rubber composition for the cap tread is not more than 30 % by weight and the content of an epoxidized natural rubber in the rubber component contained in the rubber composition for the cap tread is not less than 70 % by weight.

The tire of the present invention is also characterized in that a thickness of the base tread is 17 to 50 % of the overall thickness of the tire tread.

First, the base tread of the tire tread in the tire of the present invention is explained.

The base tread is prepared by using a rubber composition for a base tread.

The rubber component contained in the rubber composition for a base tread comprises a natural rubber (NR).

As for NR, general NR in the rubber industries with a grade such as RSS#3 can be used.

Examples of the rubber component to be contained in the rubber composition for a base tread are, in addition to NR, rubbers derived from non-petroleum resources such as epoxidized natural rubber (ENR), and synthetic rubbers such as butadiene rubbers (BR), styrene-butadiene rubber (SBR), isoprene rubber (IR), butyl rubber (IIR), halogenated butyl rubber (X-IIR), chloroprene rubber (CR), ethylene-propylene-diene rubber (EPDM), and a halogenated product of a copolymer of isomonoolefin and paraalkylstyrene. When rubbers derived from non-petroleum resources are contained, except for a natural rubber, rolling resistance is increased. When a synthetic rubber is contained, an effect on environment cannot be taken into consideration, depletion of petroleum resources cannot be prepared for, and in the case where an oil price increases, a cost of the synthetic rubber also increases. Therefore, it is preferable not to contain a rubber other than NR.

Silica contained in the rubber composition for a base tread is not particularly limited, and silica prepared in a wet method or a dry method can be used.

The BET specific surface area (hereinafter referred to as BET) of the silica is not less than 80 $m^2/g$, preferably not less than 100 $m^2/g$. When the BET of silica is less than 80 $m^2/g$, the reinforcing effect resulting from the contained silica is lowered, and there is a tendency that durability is deteriorated. The BET of the silica is not more than 200 $m^2/g$, preferably not more than 180 $m^2/g$. When the BET of silica is more than 200 $m^2/g$, the viscosity is increased, processability is deteriorated, and further, there is a tendency to cause failure of finished product.

The amount of silica is not less than 25 parts by weight, preferably not less than 30 parts by weight on the basis of 100 parts by weight of the rubber component contained in the rubber composition for a base tread. When the amount of silica is less than 25 parts by weight, rubber strength and durability are lowered. The amount of silica is not more than 80 parts by weight, preferably not more than 75 parts by weight on the basis of 100 parts by weight of the rubber component contained in the rubber composition for a base tread. When the amount of silica is more than 80 parts by weight, rolling resistance is increased, processability is deteriorated, and further, there is a tendency to cause failure of finished product.

In the tire of the present invention, it is preferable to use a silane coupling agent in combination with silica for the rubber composition for a base tread.

The silane coupling agent is not particularly limited, and examples thereof are, for instance, sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(4-trimethoxysilylbutyl)tetrasulfide, bis(3-triethoxysilylpropyl)trisulfide, bis(2-triethoxysilylethyl)trisulfide, bis(4-triethoxysilylbutyl)trisulfide, bis(3-trimethoxysilylpropyl)trisulfide, bis(2-trimethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbuthyl)disulfide, bis(3-trimethoxysilylpropyl)disulfide, bis(2-trimethoxysilylethyl)disulfide, bis(4-trimethoxysilylbuthyl)disulfide, 3-trimethoxysilylpropyl-N,N-dimethylthiocarbamoyl tetrasulfide, 3-triethoxysilylpropyl-N,N-dimethylthiocarbamoyl tetrasulfide, 2-triethoxysilylethyl-N,N-dimethylthiocarbamoyl tetrasulfide, 2-trimethoxysilylethyl-N,N-dimethylthiocarbamoyl tetrasulfide, 3-trimethoxysilylpropylbenzothiazolyl tetrasulfide, 3-triethoxysilylpropylbenzothiazole tetrasulfide, 3-triethoxysilylpropylmethacrylate monosulfide, and 3-trimethoxysilylpropylmethacrylate monosulfide; mercapto silane coupling agents such as 3-mercaptopropyltrimethoxysilane, 3-mercaptopropyltriethoxysilane, 2-mercaptoethyltrimethoxysilane, and 2-mercaptoethyltriethoxysilane; vinyl silane coupling agents such as vinyltriethoxysilane and vinyltrimethoxysilane; amino silane coupling agents such as 3-aminopropyltriethoxysilane, 3-aminopropyltrimethoxysilane, 3-(2-aminoethyl)aminopropyltriethoxysilane, and 3-(2-aminoethyl)aminopropyltrimethoxysilane; glycidoxy silane coupling agents such as γ-glycidoxypropyltriethoxysilane, γ-glycidoxypropyltrimethoxysilane, γ-glycidoxypropylmethyldiethoxysilane, and γ-glycidoxypropylmethyldimethoxysilane; nitro silane coupling agents such as 3-nitropropyltrimethoxysilane and 3-nitropropyltriethoxysilane; and chloro silane coupling agents such as 3-chloropropyltrimethoxysilane, 3-chloropropyltriethoxysilane, 2-chloroethyltrimethoxysilane and 2-chloroethyltriethoxysilane. These silane coupling agents may be used alone or may be used in combination of two or more kinds thereof.

When silica and a silane coupling agent are used in combination, an amount of the silane coupling agent is preferably not less than 4 parts by weight, more preferably not less than 6 parts by weight on the basis of 100 parts by weight of silica. When the amount of the silane coupling agent is less than 4 parts by weight, contribution to hydrophobication of silica resulting from the contained silane coupling agent is lowered, and there is a tendency that an effect of lowering a viscosity is insufficient. The amount of the silane coupling agent is preferably not more than 16 parts by weight, more preferably not more than 14 parts by weight. When the amount of the silane coupling agent is more than 16 parts by weight, no improvement effect resulting from the contained silane coupling agent is exhibited, and there is a tendency that a cost increases.

The rubber composition for a base tread that is used for the base tread of the tire tread in the tire of the present invention suitably contains additives conventionally used in the rubber industries such as a wax, various antioxidants, stearic acid, zinc oxide, a vulcanizing agent such as sulfur, and various vulcanization accelerators, in addition to the above-described rubber component, silica and silane coupling agent.

With respect to the tire of the present invention, as for a preparation process of the rubber composition for a base tread, known methods can be used. For instance, it is preferable to knead the above-described respective components with a rubber kneading equipment such as an open roll or a Banbury mixer.

It is preferable that the tire tread in the tire of the present invention is composed of a two-layered structure comprising the cap tread and the base tread prepared by using the aforementioned rubber composition for a base tread. The tire of the present invention has the tire tread comprising the base tread prepared by using the aforementioned rubber composition for a base tread, and thereby rolling resistance can be decreased without lowering steering stability.

Secondly, the cap tread of the tire tread constituting the tire of the present invention is explained.

The cap tread is prepared by using the rubber composition for a cap tread.

The rubber composition for a cap tread that is used for the cap tread constituting the tire tread in the tire of the present invention contains a rubber component, silica and a silane coupling agent, and optionally carbon black and an oil.

For the rubber component, silica, and silane coupling agent in the rubber composition for a cap tread, the same rubber component, silica, and silane coupling agent as used in the rubber composition for a base tread can be used.

The content of NR in the rubber component contained in the rubber composition for a cap tread is not more than 30 % by weight. When the content of NR is more than 30 % by weight, the glass transition temperature (Tg) is excessively lowered, and there is a tendency that sufficient grip performance required for the rubber composition for a cap tread cannot be obtained.

The content of ENR in the rubber component contained in the rubber composition for a cap tread is not less than 70 % by weight. When the content of ENR is less than 70 % by weight, the glass transition temperature (Tg) is excessively lowered, and there is a tendency that sufficient grip performance required for the rubber composition for a cap tread cannot be obtained.

The amount of silica is not less than 50 parts by weight, preferably not less than 60 parts by weight on the basis of 100 parts by weight of the rubber component contained in the rubber composition for a cap tread. When the amount of silica is less than 50 parts by weight, there is a tendency that abrasion resistance is deteriorated. The amount of silica is not more than 90 parts by weight, preferably not more than 80 parts by weight on the basis of 100 parts by weight of the rubber component contained in the rubber composition for a cap tread. When the amount of silica is more than 90 parts by weight, processability is deteriorated, and there is a tendency to cause failure of finished product.

According to the present invention, a silane coupling agent is used in combination with silica in the rubber composition for a cap tread in the tire of the present invention.

The amount of the silane coupling agent is not less than 4 parts by weight, preferably not less than 6 parts by weight on the basis of 100 parts by weight of silica. When the amount of the silane coupling agent is less than 4 parts by weight, contribution to hydrophobication of silica resulting from the contained silane coupling agent is lowered, and there is a tendency that an effect of lowering a viscosity is insufficient. The amount of the silane coupling agent is not more than 16 parts by weight, preferably not more than 14 parts by weight. When the amount of the silane coupling agent is more than 16 parts by weight, no improvement effect resulting from the contained silane coupling agent is exhibited, and there is a tendency that a cost increases.

A nitrogen adsorbing-specific surface area (hereinafter referred to as N$_2$SA) of carbon black is preferably not less than 50 m$^2$/g, more preferably not less than 80 m$^2$/g. When the N$_2$SA of carbon black is less than 50 m$^2$/g, a reinforcing effect resulting from the contained carbon black is lowered, and there is a tendency that abrasion resistance is deteriorated. The N$_2$SA of carbon black is preferably not more than 280 m$^2$/g, more preferably not more than 250 m$^2$/g. When the N$_2$SA of carbon black is more than 280 m$^2$/g, processability is deteriorated, dispersion failure is caused, and there is a tendency that durability is deteriorated.

An amount of carbon black is preferably not more than 5 parts by weight on the basis of 100 parts by weight of the rubber component contained in the rubber composition for a cap tread. When the amount of carbon black is more than 5 parts by weight, there are tendencies that an effect on environment cannot be taken into consideration, and decrease in petroleum supply in future cannot be prepared for.

It is preferable that an oil is blended in the rubber composition for a cap tread in the tire of the present invention.

Examples of the oil are process oils such as paraffin process oil, naphthenate process oil, and aromatic process oil, and vegetable oils such as castor oil, cotton seed oil, linseed oil, rapeseed oil, soybean oil, palm oil, coconut oil, peanut oil, rosin, pine oil, pine tar, tall oil, corn oil, rice oil, safflower oil, sesame oil, olive oil, sunflower oil, palm kernel oil, camellia oil, jojoba oil, macadamia nut oil, safflower oil, and tung oil.

An amount of the oil is preferably not more than 20 parts by weight, more preferably not more than 15 parts by weight on the basis of 100 parts by weight of the rubber component contained in the rubber composition for a cap tread. When the amount of the oil is more than 20 parts by weight, there is a tendency that the oil is modified due to thermal aging and as a result, rubber hardness increases.

The rubber composition for a cap tread that is used for the cap tread constituting the tire tread in the tire of the present invention can suitably contain additives generally used in the rubber industries such as a wax, various antioxidants, stearic acid, zinc oxide, a vulcanizing agent such as sulfur, and various vulcanization accelerators, in addition to the above-described rubber component, silica, silane coupling agent, carbon black and oil.

With respect to the tire of the present invention, as for a preparation process of the rubber composition for a cap tread, known methods can be used. For instance, it is preferable to knead the above-described respective components with a rubber kneading equipment such as an open roll or a Banbury mixer.

The tire of the present invention can be prepared by a general method. Namely, the rubber composition for a base tread and the rubber composition for a cap tread are respectively kneaded according to a general method of processing a tire tread, for example, by using a roll, a Banbury mixer or a kneader. The obtained rubber composition for a base tread and the rubber composition for a cap tread are extrusion-processed into a shape of a two-layered tread comprising the base tread and the cap tread, and then laminated with other tire parts on a tire molding machine by a general process to mold an unvulcanized tire. This unvulcanized tire is heated and pressurized in a vulcanizer to obtain the tire of the present invention.

With respect to the tire tread in the tire of the present invention, a ratio of a base tread thickness to an overall thickness of the tire tread (base ratio) is not less than 17 %, preferably not less than 20 %. If the base ratio is less than 17 %, rolling resistance cannot be lowered. Further, the ratio of the base tread thickness to the overall thickness of the tire tread (base ratio) is not more than 50 %, preferably not more than 40 %. When the base ratio is more than 50 %, steering stability is deteriorated.

With respect to the tire tread in the tire of the present invention, a ratio of a cap tread thickness to an overall thickness of the tire tread (cap ratio) is preferably not less than 50 %, more preferably not less than 60 %. The ratio of the cap tread thickness to the overall thickness of the tire tread (cap ratio) is preferably not more than 83 %, more preferably not more than 80 %.

By having the tread composed of the two-layered structure comprising the base tread prepared by using the rubber composition for a base tread and the cap tread, the tire of the present invention is to be an ecological tire, which is earth-friendly, and can provide for the future decrease of petroleum supply.

EXAMPLES

The present invention is specifically explained in detail based on Examples, but the present invention is not limited only thereto.

Various chemicals used in Examples and Comparative Examples are shown in the following.

NR: TSR20
ENR: ENR25 (epoxidization ratio: 25 % by mole) available from Kumpulan Guthrie Berhad Co.
Carbon black: SHOWBLACK N220 (N$_2$SA: 115 m$^2$/g) available from CABOT JAPAN K.K.
Silica: Ultrasil VN3 (BET: 175 m$^2$/g) available from Degussa GmbH.
Silane coupling agent: Si69 (bis(3-triethoxysilylpropyl)tetrasulfide) available from Degussa GmbH.
Oil: Process X-140 available from Japan Energy Corporation

Wax: SANNOC wax available from Ouchi Shinko Chemical Industrial Co., Ltd.

Antioxidant: NOCRAC 6C (N-(1,3-dimethylbutyl)-N'-phenyl-p-phenylenediamine) available from Ouchi Shinko Chemical Industrial Co., Ltd.

Stearic acid: available from NOF Corporation

Zinc oxide: Zinc oxide No.1 available from Mitsui Mining & Smelting Co., Ltd.

Sulfur: Sulfur powder available from Tsurumi Chemical Industry Co., Ltd.

Vulcanization accelerator: Nocceler NS (N-tert-butyl-2-benzothiazolylsulfenamide) available from Ouchi Shinko Chemical Industrial Co., Ltd.

EXAMPLES 1 to 5 and COMPARATIVE EXAMPLES 1 to 5

(Preparation of vulcanized rubber compositions)

According to compounding contents shown in Table 1, by using a Banbury mixer, chemicals other than sulfur and a vulcanization accelerator were kneaded under the temperature condition at 130°C for 2 minutes to obtain a kneaded product. Then, the sulfur and vulcanization accelerator were added to the obtained kneaded product, and by using an open roll, the mixture was kneaded for 1 and a half minutes under the temperature condition of 90°C to obtain an unvulcanized rubber composition. Further, the obtained unvulcanized rubber composition was press-vulcanized under the temperature condition of 170°C for 12 minutes, and rubber compositions B1 to B5 for a base tread (referred to as Base in Table 1) and a rubber composition C for a cap tread (referred to as Cap in Table

1) were obtained.

(Preparation of vulcanized rubber sheets)

A rubber sheet for a cap tread was laminated on a rubber sheet for a base tread in an unvulcanized state, and the laminated sheets were vulcanized to prepare a vulcanized rubber sheet with each composition. Here, Table 2 shows a ratio of a cap tread thickness to an overall thickness of a tire tread (referred to as cap ratio (%) in Table 2) and a ratio of a base tread thickness to the overall thickness of the tire tread (referred to as base ratio (%) in Table 2) which are measured with a gauge.

(Preparation of tire)

The rubber composition for a base tread and the rubber composition for a cap tread in the unvulcanized state were extruded into a two-layered tread with combinations described in Table 2, the two-layered tread was laminated with other parts and press-vulcanized under the temperature condition of 180°C for 10 minutes to prepare each test tire (tire size: 195/65R15) of Examples 1 to 5 and Comparative Examples 1 to 5.

(Tensile test)

By using a No.3 dumbbell, vulcanized rubber test pieces were prepared from the above-described rubber compositions B1 to B5 for a base tread, and a tensile test was carried out according to JIS K6251 "Rubber, vulcanized or thermoplastic -- Determination of tensile stress-strain properties". Strength at break (TB) and elongation at break (EB) were measured to calculate TBxEB/2 (fracture energy). The rubber strength index of B1 was referred to as 100 and a fracture energy of each composition was expressed as a rubber strength index by the following equation. The larger the rubber strength index is, the higher the rubber strength is.

(Rubber strength index) =

(Fracture energy of each composition) ÷ (Fracture energy of B1) × 100

Evaluation results of the tensile test are shown in Table 1.

TABLE 1

| | Cap | Base | | | | |
|---|---|---|---|---|---|---|
| | C | B1 | B2 | B3 | B4 | B5 |
| Amounts (part by weight) | | | | | | |
| NR | 30 | 100 | 100 | 100 | 100 | 100 |
| ENR | 70 | - | - | - | - | - |
| Carbon black | 5 | - | - | - | - | - |
| Silica | 75 | 35 | 55 | 70 | 20 | 90 |
| Silane coupling agent | 6 | 2.8 | 4.4 | 5.6 | 1.6 | 7.2 |
| Oil | 15 | - | - | - | - | - |
| Wax | 1.5 | 1.5 | 1.5 | 1.5 | 1.5 | 1.5 |
| Antioxidant | 2 | 1.5 | 1.5 | 1.5 | 1.5 | 1.5 |
| Stearic acid | 2 | 2 | 2 | 2 | 2 | 2 |
| Zinc oxide | 3 | 3.5 | 3.5 | 3.5 | 3.5 | 3.5 |
| vSulfur | 1.8 | 1.8 | 1.8 | 1.8 | 1.8 | 1.8 |
| Vulcanization accelerator | 2.0 | 2.0 | 2.0 | 2.0 | 2.0 | 2.0 |
| Evaluation results | | | | | | |
| Rubber strength index | - | 100 | 108 | 117 | 90 | 125 |

(Viscoelasticity test)

By using a viscoelasticity spectrometer manufactured by Ueshima Seisakusho Co., Ltd., loss tangents (tan δ) of vulcanized rubber sheets of Examples 1 to 5 and Comparative Examples 1 to 5 were measured under the conditions of an initial strain of 10 %, a dynamic strain of 1 %, a frequency of 10 Hz, and a temperature of 60°C. The rolling resistance index of Comparative Example 1 was referred to as 100 and tan δ of each composition was expressed as a rolling resistance index by the following equation. The larger a rolling resistance index is, the more excellent low heat build-up property is.

(Rolling resistance index) =

(tan δ of Comparative Example 1)/(tan δ of each composition) × 100

(Steering stability test)

The tires of Examples 1 to 5 and Comparative Examples 1 to 5 were mounted respectively on a test vehicle (Mark II manufactured by TOYOTA MOTOR CORPORATION), and in-vehicle running was carried out at 80 km/h on a test course with a dry asphalt surface. During the in-vehicle running, a test driver conducted a sensory evaluation on control stability of steering with 10 grades. The larger an evaluation grade is, the more excellent steering stability is.
Evaluation results of the viscoelasticity test and the steering stability test are shown in Table 2.

TABLE 2

| | Ex | | | | | Com. Ex. | | | | |
|---|---|---|---|---|---|---|---|---|---|---|
| | 1 | 2 | 3 | 4 | 5 | 1 | 2 | 3 | 4 | 5 |
| Test tire | | | | | | | | | | |
| Base | B1 | B2 | B3 | B1 | B1 | - | B1 | B1 | B4 | B5 |
| Cap | C | C | C | C | C | C | C | C | C | C |
| Cap ratio (%) | 70 | 70 | 70 | 80 | 55 | 100 | 85 | 30 | 70 | 70 |
| Base ratio (%) | 30 | 30 | 30 | 20 | 45 | 0 | 15 | 70 | 30 | 30 |
| Evaluation results | | | | | | | | | | |
| Rolling resistance index | 120 | 113 | 106 | 114 | 132 | 100 | 100 | 150 | 130 | 95 |

(continued)

| | Ex | | | | | Com. Ex. | | | | |
|---|---|---|---|---|---|---|---|---|---|---|
| | 1 | 2 | 3 | 4 | 5 | 1 | 2 | 3 | 4 | 5 |
| Steering stability test | 6 | 6 | 7 | 6 | 4.5 | 6 | 6 | 2 | 4 | 6 |

INDUSTRIAL APPLICABILITY

According to the present invention, there is provided a tire having a tire tread comprising a cap tread and a base tread that does not give an adverse effect on earth environment, and makes it possible to prepare for decrease in petroleum supply in future, and further improve rolling resistance, steering stability and rubber strength in favorable balance, as compared with a tire prepared by using a rubber composition for a tread or a rubber composition for a base tread, which mainly comprises materials derived from petroleum resources.

**Claims**

1.  A tire having a tire tread comprising a cap tread and a base tread, wherein
    the base tread is prepared by using a rubber composition for a base tread comprising 25 to 80 parts by weight of silica having a BET specific surface area between 80 and 200 m$^2$/g on the basis of 100 parts by weight of a rubber component comprising a natural rubber,
    the cap tread is prepared by using a rubber composition for a cap tread, wherein the rubber composition for the cap tread contains between 50 and 90 parts by weight of silica on the basis of 100 parts by weight of the rubber component and between 4 and 16 parts by weight of a silane coupling agent on the basis of 100 parts by weight of silica, wherein the content of a natural rubber in the rubber component contained in the rubber composition for the cap tread is not more than 30 % by weight and the content of an epoxidized natural rubber in the rubber component contained in the rubber composition for the cap tread is not less than 70 % by weight, and
    the thickness of the base tread is 17 to 50 % of the overall thickness of the tire tread.

**Patentansprüche**

1.  Reifen mit einer Reifenlauffläche, welche eine Decklauffläche und eine Grundlauffläche umfasst, wobei
    die Grundlauffläche hergestellt wird durch Verwenden einer Kautschukzusammensetzung für eine Grundlauffläche, welche 25 bis 80 Gewichtsteile Silica mit einer spezifischen BET-Oberfläche zwischen 80 und 200 m$^2$/g, bezogen auf 100 Gewichtsteile einer Kautschukkomponente, welche einen Naturkautschuk enthält, enthält,
    die Decklauffläche hergestellt wird durch Verwenden einer Kautschukzusammensetzung für eine Decklauffläche, wobei die Kautschukzusammensetzung für die Decklauffläche zwischen 50 und 90 Gewichtsteile Silica, bezogen auf 100 Gewichtsteile der Kautschukkomponente, und zwischen 4 und 16 Gewichtsteile eines Silankupplungsmittels, bezogen auf 100 Gewichtsteile Silica, enthält, wobei die Menge von Nauturkautschuk in der Kautschukkomponente, welche in der Kautschukzusammensetzung für die Decklauffläche enthalten ist, nicht mehr als 30 Gew.-% beträgt, und wobei die Menge von epoxidiertem Naturkautschuk in der Kautschukkomponente, welche in der Kautschukzusammensetzung für die Decklauffläche enthalten ist, nicht weniger als 70 Gew.-% beträgt, und wobei
    die Dicke der Grundlauffläche 17 bis 50 % der Gesamtdicke der Reifenlauffläche beträgt.

**Revendications**

1.  Pneumatique ayant une bande de roulement de pneumatique comprenant une bande de roulement de chape et une bande de roulement de base où
    la bande de roulement de base est préparée au moyen d'une composition de caoutchouc pour une bande de roulement de base comprenant 25 à 80 parties en poids de silice ayant une surface spécifique BET entre 80 et 200 m$^2$/g sur la base de 100 parties en poids d'un composant caoutchouc comprenant un caoutchouc naturel,
    la bande de roulement de chape est préparée au moyen d'une composition de caoutchouc pour une bande de roulement de chape où la composition de caoutchouc pour la bande de roulement de chape contient entre 50 et 90 parties en poids de silice sur la base de 100 parties en poids du composant caoutchouc et entre 4 et 16 parties en poids d'un agent de couplage silane sur la base de 100 parties en poids de silice, où la teneur d'un caoutchouc naturel dans le composant caoutchouc contenu dans la composition de caoutchouc pour la bande de roulement de chape n'est pas supérieure à 30 % en poids et la teneur d'un caoutchouc naturel époxydé dans le composant caoutchouc contenu dans la composition de caoutchouc pour la bande de roulement de chape n'est pas inférieure à 70 % en poids, et

l'épaisseur de la bande de roulement de base est 17 à 50 % de l'épaisseur totale de la bande de roulement de pneumatique.

**EP 1 988 120 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003063206 A
- EP 1577341 A1
- EP 1426409 A1
- EP 0644235 A1
- EP 1491368 A2
- EP 0940435 A1
- EP 0754574 A2
- EP 0738614 A1